# EUROPEAN PATENT APPLICATION

(11) **EP 3 300 230 A1**
(43) Date of publication of application: **28.03.2018**
(21) Application number: 17781717.8
(22) Date of filing: 20.01.2017
(51) Int. Cl.: H02K 21/14

(54) **PERMANENT MAGNET MOTOR**

(30) Priority: 12.04.2016 CN 201610225218
(71) Applicant: Jing-Jin Electric Technologies Co., Ltd, Beijing 100016 (CN)
(72) Inventor: ZHANG, Liangliang, Beijing 100016 (CN); ZHANG, Pei, Beijing 100016 (CN)
(74) Representative: Noréns Patentbyrå AB
(86) International application number: PCT/CN2017/071846
(87) International publication number: WO 2017/177740

(57) **Abstract**

The present disclosure discloses a permanent magnet electric motor, which is a radial flux electric motor, consisting of a stator and a rotor, wherein an inner circle of the stator is provided with N stator teeth evenly in circumferential direction, each of the stator teeth is wound by a coil, and the N coils form stator windings, wherein, the N is an integer not less than 12. Additionally, the number of magnetic poles of the rotor is not less than 12 so that widths and the centrifugal forces of the magnets under each of the magnetic poles are limited, thereby facilitating the high speed operation of the electric motor and improving the safety. The stator is manufactured by laminating a plurality of annular thin sheets with a same shape, and the material of the annular thin sheets is an amorphous magnetic conductive material, whose power loss in an alternating magnetic field is lower than that of silicon steel, which hugely increases the efficiency of the electric motor.

## Description

### TECHNICAL FIELD

The present disclosure relates to the field of electric motors, and in particular to a permanent magnet electric motor.

### BACKGROUND ART

The presently commonly known structure of the electric motors used for vehicles consists of a stator, a rotor, a rotating shaft, a machine base, etc. The stator is generally manufactured by laminating cold rolled silicon steel sheets with preformed slots, and installing windings into the slots. However, the magnetic conductive materials of the stators generally have power loss in an alternating magnetic field, and the numerical value of the power loss when silicon steel sheets serve as the magnetic conductive material is very large. Especially at the high speed operating range, the power loss even exceeds a half of the sum of the electric motor power loss, which results in a relatively low efficiency of the electric motor, and affects the operation safety. The electric motors with the traditional structures, in order to reduce the power loss, commonly employ a small number of poles, such as 6 poles and 8 poles. Due to the small pole numbers, the widths of the magnets under each of the magnetic poles of the rotor are relatively large, and thus large centrifugal forces are generated, which is adverse to the high speed operation of the electric motors.

### SUMMARY OF THE DISCLOSURE

In view of the above problems, the present disclosure provides a permanent magnet electric motor, to solve the problems of the conventional electric motors that the power loss is relatively large and high speed operation is difficult.

To achieve the above objects, the technical solutions of the present disclosure are realized as follows:
The present disclosure provides a permanent magnet electric motor, which is a radial flux electric motor and consist of a stator and a rotor, wherein
an inner circle of the stator is provided with N stator teeth evenly in circumferential direction, each of the stator teeth is wound by a coil, and the N coils form stator windings, wherein, the N is an integer not less than 12; and
the stator is manufactured by laminating a plurality of annular thin sheets with a same shape, and the material of the annular thin sheets is an amorphous magnetic conductive material.

Optionally, the amorphous magnetic conductive material is an iron-based amorphous alloy.

Optionally, the rotor is manufactured by laminating a plurality of annular thin sheets with a same shape, and the material of the annular thin sheets is silicon steel; and
an outer circle of the rotor is provided with M magnetic poles evenly in circumferential direction, L rotor slots are provided under each of the magnetic poles, and each of the rotor slots is provided with 1 magnet embedded therein, wherein, the M is an even number not less than 12, and the L is an integer not less than 1.Optionally, directions of the magnetic poles of the magnets are perpendicular to or inclined to the radial directions of the rotor.

Optionally, the stator windings employ a concentrated winding.
The advantageous effects of the present disclosure are: the present disclosure provides a permanent magnet electric motor, which is a radial flux electric motor, consisting of a stator and a rotor, wherein an inner circle of the stator is provided with N stator teeth evenly in circumferential direction, each of the stator teeth is wound by a coil, and the N coils form stator windings, wherein, the N is an integer not less than 12. Additionally, the number of the magnetic poles is not less than 12 so that widths and centrifugal forces of the magnets under each of the magnetic poles are limited, thereby facilitating the high speed operation of the electric motor and improving the safety. The stator is manufactured by laminating a plurality of annular thin sheets with a same shape, and the material of the annular thin sheets is an amorphous magnetic conductive material, whose power loss in an alternating magnetic field is lower than that of silicon steel, which hugely increases the efficiency of the electric motor.

The above description is only an overview of the technical solutions of the present disclosure. In order to understand the technical means of the present disclosure more clearly, and to implement them according to the contents of the description, and in order to make the above and other objects, features and advantages of the present disclosure more fully understood, the special embodiments of the present disclosure are provided below.

### BRIEF DESCRIPTION OF THE DRAWINGS

Other advantages and benefits will become clear to a person skilled in the art by reading the detailed description of preferable embodiments below. The drawing is only for the purpose of illustrating the preferable embodiments, and is not considered as limitation to the present disclosure.

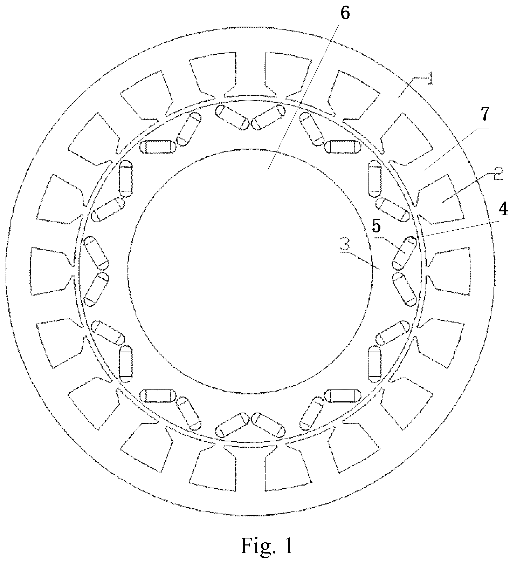

Fig. 1 is a schematic diagram of structure of an electric motor of an embodiment of the present disclosure.

In that, 1 denotes a stator, 2 stator slots, 3 a rotor, 4 rotor slots, 5 magnets, 6 a rotating shaft and 7 stator teeth.

### DETAILED DESCRIPTION

The exemplary embodiments of the present disclosure will be described in further detail below by referring to the drawing. Although the drawing illustrates the exemplary embodiments of the present disclosure, it should be understood that, the present disclosure can be implemented in various forms, which should not be limited by the embodiments illustrated herein. In contrast, the purpose of providing those embodiments is to clearer understand the present disclosure, and to completely convey the scope of the present disclosure to a person skilled in the art.

As shown in Fig. 1, the embodiment of the present disclosure provides a permanent magnet electric motor, which is a radial flux electric motor, consisting of a stator 1, a rotor 3 and a rotating shaft 6. The rotor 3 is installed on the rotating shaft 6, and can drive the rotating shaft 6 to rotate. An inner circle of the stator 1 is provided with N stator slots evenly in circumferential direction, wherein, the N is an integer not less than 12. In a special embodiment of the present disclosure, the N is 18. The stator slots 2 are opened slots and are located at the edge of the inner circle of the stator 1, and the openings are facing the rotor 3. Two adjacent stator slots 2 form one stator tooth 7, each of the stator teeth 7 is wound by a coil (not shown in the figure), a span of each of the coils is one tooth pitch, the N coils form stator windings, and the stator windings employ a concentrated winding. The concentrated winding facilities increasing the inserting speed of the windings, and reducing the heights of the ends of the windings.

In the embodiment of the present disclosure, the stator 1 is manufactured by laminating a plurality of annular thin sheets with a same shape, and the material of the annular thin sheets is an amorphous magnetic conductive material. In an embodiment of the present disclosure, the amorphous magnetic conductive material is an iron-based amorphous alloy. The power loss of the amorphous magnetic conductive material in an alternating magnetic field is lower than that of silicon steel, which hugely increases the efficiency of the electric motor, especially when the electric motor is running at a high speed.

The rotor 3 is manufactured by laminating a plurality of annular thin sheets with a same shape, and the material of the annular thin sheets is silicon steel. An outer circle of the rotor 3 is provided with M magnetic poles in circumferential direction, L rotor slots 3 are provided under each of the magnetic poles, and each of the rotor slots 3 is provided with one magnet 5 embedded therein, wherein the number M of the rotor slots is an even number not less than 12, and the number L of the rotor slots under each of the magnetic poles is an integer not less than 1. In the embodiment of the present disclosure, the rotor is provided with totally 12 magnetic poles, 2 rotor slots are provided under each of the magnetic poles, each of the rotor slots is provided with one magnet 5 embedded therein, and there are totally 24 magnets. Here, the number of the magnetic poles refers to the number of the magnetic fields that are provided in the rotor, wherein each two magnets form an intensified magnetic field. It should be noted that, both the number M of the magnetic poles and the number L of the rotor slots under each of the magnetic poles can be freely set as required. The directions of the magnetic poles of the magnets 5 are inclined to the radial directions of the rotor 3, and two magnets under each of the magnetic poles are symmetrically arranged. The magnetic fluxes of the magnets under each of the magnetic poles converge and then pass through the air gap between the stator and the rotor to reach the iron core of the stator. It can be understood that, the directions of the magnetic poles of the magnets may also be perpendicular to the radial directions of the rotor.

In the embodiment of the present disclosure, the number of the magnetic poles is 12, and the number of the magnets is 24. With the rotor of a same size, the number of the magnetic poles is relatively larger so that the widths and the centrifugal forces of the magnets 5 under each of the magnetic poles are limited, thereby facilitating the high speed operation of the electric motor and improving the safety of the electric motor.

In conclusion, the advantageous effects of the embodiments of the present disclosure are: the present disclosure provides a permanent magnet electric motor, which is a radial flux electric motor, consisting of a stator and a rotor, wherein an inner circle of the stator is provided with N stator teeth evenly in circumferential direction, each of the stator teeth is wound by a coil, and the N coils form stator windings, wherein, the N is an integer not less than 12. Additionally, the number of the magnetic poles of the rotor is not less than 12 so that the widths and the centrifugal forces of the magnets under each of the magnetic poles are limited, thereby facilitating the high speed operation of the electric motor and improving the safety. The stator is manufactured by laminating a plurality of annular thin sheets with a same shape, and the material of the annular thin sheets is an amorphous magnetic conductive material, whose power loss in an alternating magnetic field is lower than that of silicon steel, which hugely increases the efficiency of the electric motor.

The above descriptions are merely preferable embodiments of the present disclosure, and are not limiting the protection scope of the present disclosure. Any modifications, equivalent substitutions or improvements that are made within the spirit and principle of the present disclosure are all included in the protection scope of the present disclosure.

## Claims

1. A permanent magnet electric motor, which is a radial flux electric motor, consisting of a stator (1) and a rotor (3), **characterized in that**:
an inner circle of the stator (1) is provided with N stator teeth (7) evenly in circumferential direction, each of the stator teeth (7) is wound by a coil, and the N coils form stator windings, wherein, the N is an integer not less than 12; and
the stator (1) is manufactured by laminating a plurality of annular thin sheets with a same shape, and the material of the annular thin sheets is an amorphous magnetic conductive material.

2. The permanent magnet electric motor according to claim 1, **characterized in that**: the amorphous magnetic conductive material is an iron-based amorphous alloy.

3. The permanent magnet electric motor according to claim 1, **characterized in that**: the rotor (3) is manufactured by laminating a plurality of annular thin sheets with a same shape, and the material of the annular thin sheets is silicon steel; and
an outer circle of the rotor (3) is provided with M magnetic poles evenly in circumferential direction, L rotor slots (4) are provided under each of the magnetic poles, and each of the rotor slots (4) is provided with 1 magnet (5) embedded therein, wherein, the M is an even number not less than 12, and the L is an integer not less than 1.

4. The permanent magnet electric motor according to claim 3, **characterized in that**: directions of the magnetic poles of the magnets (5) are perpendicular to or inclined to the radial directions of the rotor (3).

5. The permanent magnet electric motor according to claim 1, **characterized in that**: the stator windings employ a concentrated winding.
